# EUROPÄISCHE PATENTSCHRIFT

(11) **EP 1 276 638 B1**
(45) Veröffentlichungstag und Bekanntmachung des Hinweises auf die Patenterteilung: **11.02.2004**
(21) Anmeldenummer: 01931672.8
(22) Anmeldetag: 27.04.2001
(51) Int. Cl.: B60R 1/06

(54) **ANTRIEBSVORRICHTUNG ZUM VERSTELLEN DER SPIEGELANORDNUNG EINES RÜCKBLICKSPIEGELS**
DRIVE DEVICE FOR ADJUSTING THE MIRROR ASSEMBLY OF A REARVIEW MIRROR
DISPOSITIF D'ENTRAINEMENT POUR LE REGLAGE DE L'ENSEMBLE MIROIR D'UN RETROVISEUR

(30) Priorität: 27.04.2000 DE 10021305
(43) Veröffentlichungstag der Anmeldung: 22.01.2003
(73) Patentinhaber: Magna Reflex Holding GmbH, 97959 Assamstadt (DE)
(72) Erfinder: PACHER, Wolfgang, A-8200 Gleisdorf (AT); STARK, Johann, A-8010 Graz (AT)
(74) Vertreter: Pfenning, Meinig & Partner GbR
(86) Internationale Anmeldenummer: PCT/EP2001/004840
(87) Internationale Veröffentlichungsnummer: WO 2001/083265

(56) Entgegenhaltungen:
- DE-A- 3 600 869
- US-A- 5 050 975
- PATENT ABSTRACTS OF JAPAN vol. 009, no. 060 (M-364), 16. März 1985 (1985-03-16) & JP 59 195451 A (NISSAN JIDOSHA KK;OTHERS: 01), 6. November 1984 (1984-11-06)

## Beschreibung

Die Erfindung betrifft eine Antriebsvorrichtung zum Verstellen der Spiegelanordnung eines Rückblickspiegels für ein Fahrzeug nach dem Oberbegriff des Hauptanspruchs.

Ein Rückblickspiegel weist in bekannter Weise einen Spiegelfuß, der an einem Fahrzeug befestigt ist und einen Spiegelkopf auf, der aus einem Spiegelkopfgehäuse sowie einer in dem Gehäuse aufgenommenen Spiegelglasanordnung sowie einem mit der Spiegelglasanordnung verbundenen Verstellantrieb besteht. Der Verstellantrieb weist üblicherweise zwei Elektromotoren, einen Horizontalmotor und einen Vertikalmotor auf, die die Spiegelglasanordnung über ein zugeordnetes Getriebe um eine horizontale Achse und eine vertikale Achse schwenken. Die Verstellung der Spiegelanordnung wird über einen Betätigungsschalter gesteuert, der im Innenraum des Fahrzeugs angeordnet ist und vom Fahrer oder Beifahrer betätigt werden kann. Dabei ist der Betätigungsschalter üblicherweise in vier Richtungen betätigbar, wobei abhängig von der Richtung der Betätigung unterschiedliche Motorsignale geliefert werden, die den jeweiligen Vertikal- oder Horizontalmotor in die eine oder die andere Richtung ansteuern. Üblicherweise besteht die elektrische Verbindung zwischen dem Betätigungsschalter und dem Verstellantrieb aus drei Leitungen, wobei eine Leitung sowohl mit dem Vertikalmotor als auch mit dem Horizontalmotor verbunden ist und die anderen zwei Leitungen jeweils mit dem Horizontalmotor oder mit Vertikalmotor verbunden sind.

Für größere Fahrzeuge oder Gespanne werden Rückblickspiegel verwendet, bei denen der Spiegelkopf um einen Drehpunkt herum beispielsweise aus einer horizontalen Stellung in eine vertikale Stellung gedreht werden kann, damit in bestimmten Situationen das Geschehen um das Fahrzeug herum und hinter dem Fahrzeug besser beobachtet werden kann. Da der in dem Spiegelgehäuse vorhandene Verstellantrieb mit dem Spiegelkopf verdreht wird, gibt es keine Zuordnung mehr zwischen Vertikal- und Horizontalverstellung des Betätigungsschalters und Vertikal- und Horizontalverstellung des Spiegelglases bzw. der Spiegelglasanordnung.

Der Erfindung liegt daher die Aufgabe zugrunde, eine Antriebsvorrichtung zum Verstellen der Spiegelanordnung eines Rückblickspiegels zu schaffen, die auch bei Drehung des Spiegelkopfes in Bezug auf den Spiegelfuß aus einer ersten Stellung, beispielsweise einer horizontalen Stellung, in eine zweite Stellung, beispielsweise eine vertikale Stellung die Zuordnung zwischen der jeweiligen von dem Betätigungsschalter gelieferten Verstellrichtung und der Richtung der Verstellung des Spiegelglases beibehält.

Diese Aufgabe wird erfindungsgemäß durch die kennzeichnenden Merkmale des Hauptanspruchs in Verbindung mit den Merkmalen des Oberbegriffs gelöst.

Dadurch, daß die Antriebsvorrichtung eine einen Positionsschalter umfassende elektrische/elektronische Umschaltvorrichtung aufweist, wobei der Positionsschalter abhängig von der ersten und der zweiten Stellung unterschiedliche Schaltzustände einnimmt und daß die Umschaltvorrichtung die an die Elektromotoranordnung gelieferten Signale abhängig vom Schaltzustand des Positionsschalter derart umschaltet, daß sowohl in der ersten als auch in der zweiten Stellung des Spiegelkopfes die Zuordnung zwischen der durch den Betätigungsschalter vorgegebenen Richtung der Feststellung und der Verstellrichtung der Spiegelanordnung erhalten bleibt, ist es möglich, den Spiegelkopf in unterschiedliche Stellungen zur Verbesserung der Erkennbarkeit der Situation hinter und neben dem Fahrzeug zu bringen, ohne daß der Benutzer seine Gewohnheiten hinsichtlich der Einstellung der Spiegelanordnung des Spiegelkopfes ändern muß.

Durch die in den Unteransprüchen vorgegebenen Maßnahmen sind vorteilhafte Weiterbildungen und Verbesserungen möglich.

Besonders vorteilhaft ist, daß bei zwei Elektromotoren, einem Horizontalmotor und einem Vertikalmotor und bei einer Spannungsversorgung über drei Leitungen, wobei die Motoren an einer gemeinsamen und an die jeweils verbleibenden getrennten Leitungen angeschlossen sind, zwei Relais vorgesehen sind, über deren Kontakte abhängig von der Betätigung des Betätigungsschalters und von dem Schaltzustand des Positionsschalters der Horizontalmotor einmal für die Horizontalverstellung und einmal für die Vertikalverstellung und in entsprechender Weise der Vertikalmotor einmal für die Vertikalverstellung und einmal für die Horizontalverstellung dient. Gleichzeitig realisieren die Kontakte eines der Relais eine notwendige Drehrichtungsumkehr mindestens eines der Motoren.

Weiterhin wird in vorteilhafter Weise die Spannungsversorgung der Umschaltvorrichtung aus den jeweiligen Verstellsignalen für die Motoren gewonnen, wobei über eine durch Dioden, vorteilhafterweise einer Gleichrichterbrücke realisierten ODER-Verknüpfung der Signale für die Horizontal- bzw. -Vertikalverstellung die Relais versorgt werden. Durch Verbinden der Dioden oder Verknüpfung mit jeweils einem Transistor wird eine gegenseitige Verriegelung der Motorsignale gebildet, um ein Übersprechen auf das jeweils andere zu vermeiden.

Für den Positionsschalter, der die Stellung des Spiegelkopfes erfasst und bei einer der Stellungen einen Stromkreis der Umschaltvorrichtung schließt, können beliebige Schalter eingesetzt werden, beispielsweise mechanische, elektrooptische, induktive, kapazitive, magnetische Schalter oder eine Kombination derselben.

Ein Ausführungsbeispiel der Erfindung ist in der Zeichnung dargestellt und wird in der nachfolgenden Beschreibung näher erläutert. Es zeigen
- Fig. 1: eine Ansicht auf einen Rückblickspiegel gemäß der Erfindung und

- Fig. 2: eine schaltungsgemäße Ausgestaltung der Umschaltvorrichtung nach der vorliegenden Erfindung.

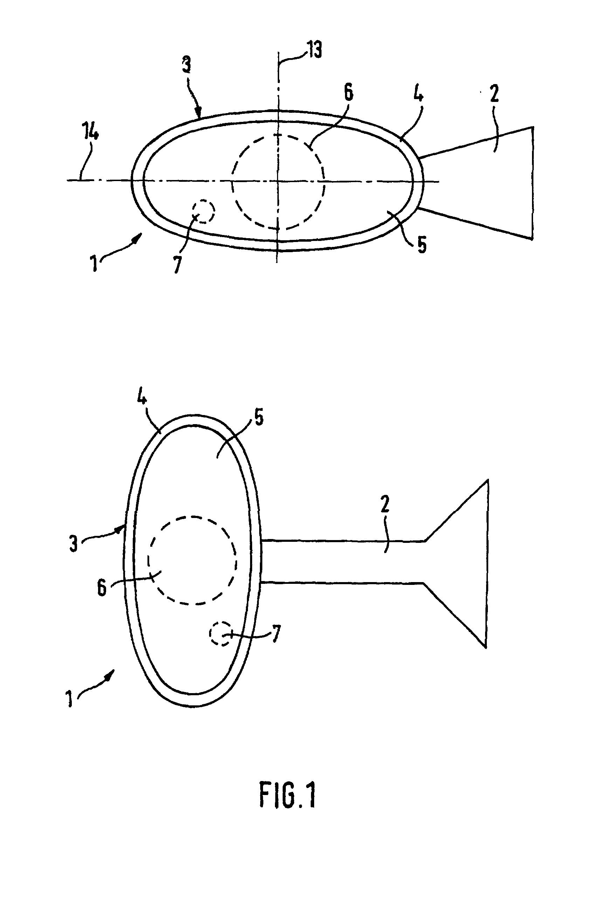

In Fig. 1 ist ein Rückblickspiegel 1 dargestellt, der mit einem Spiegelfuß 2 an einem Kraftfahrzeug befestigt ist und einen mit dem Spiegelfuß 2 verbundenen Spiegelkopf 3 aufweist. Der Spiegelkopf umfasst ein Gehäuse 4 und eine Spiegelglasscheibe bzw. eine Spiegelglasanordnung 5, die über einen durch gestrichelte Linien angedeuteten Verstellantrieb 6 relativ zum Gehäuse 4 verstellbar ist, damit die Spiegelplatte 5 an den Sichtwinkel des Fahrers angepaßt werden kann. Der Spiegelkopf 3 ist um einen schematisch angedeuteten Drehpunkt 7 relativ zum Spiegelkopf 2 verstellbar, so daß der Spiegelkopf 3 aus einer Horizontalstellung entsprechend Fig. 1 oben in eine Vertikalstellung entsprechend Fig. 1 unten schwenkbar ist. Diese Einstellungsänderung wird von dem Fahrer manuell vorgenommen. Wie aus Fig. 1 unten zu erkennen ist, ist die Vertikalstellung des Spiegelkopfes dann zu empfehlen, wenn das Fahrzeug lang ist bzw. ein Anhänger angekoppelt wird.

Der Verstellantrieb 6 ist üblicherweise über nicht dargestellte elektrische Leitungen mit einem im Innenraum des Kraftfahrzeugs vorgesehenen Betätigungsschalter verbunden, der entsprechend der gewünschten Verstellrichtung betätigbar ist und der über die Leitungen Spannungssignale an den Antrieb 6 liefert. Üblicherweise ist der Betätigungsschalter in vier Richtungen aktivierbar, in der Horizontalen nach links und rechts und in der Vertikalen nach oben und unten. Bei einer Aktivierung des Betätigungsschalters nach rechts bzw. nach links wird der Spiegel 5 entsprechend Fig. 1 oben um die vertikale Achse in die Zeichenebene hinein oder aus der Zeichenebene heraus gedreht. Entsprechendes gilt für eine Aktivierung des Betätigungsschalters in der Vertikalen bzw. nach oben und nach unten, wobei sich dann das Spiegelglas entsprechend Fig. 1 oben um die horizontale Achse 14 aus der Zeichenebene heraus oder in die Zeichenebene hinein verstellt.

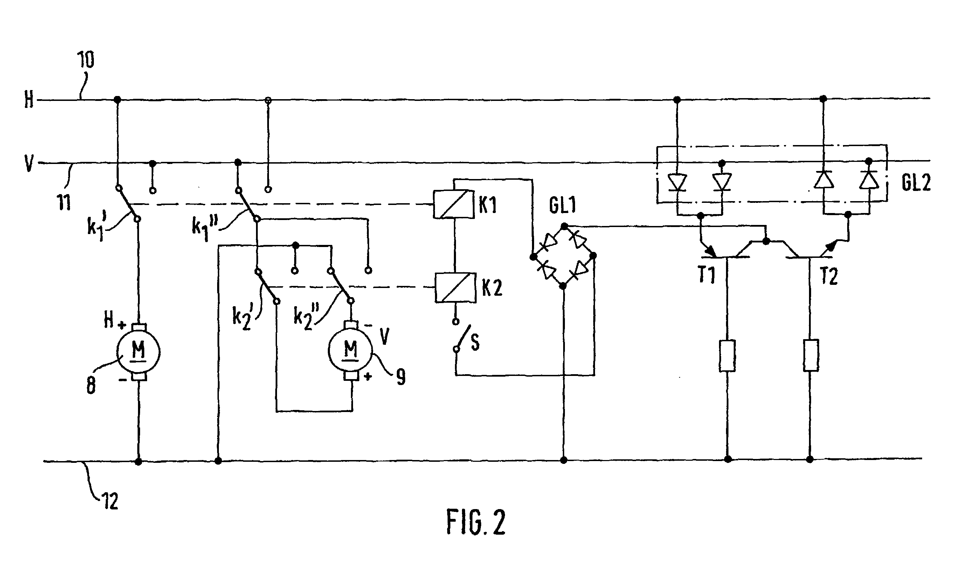

Damit auch bei einer Stellung des Spiegelkopfes 3 entsprechend Fig. 1 unten die Zuordnung zwischen den Verstellrichtungen des Spiegelglases 5 und den Aktivierungsrichtungen des Betätigungsschalters gegeben ist, ist entsprechend der Erfindung eine elektrische Umschaltvorrichtung vorgesehen, die näher in Fig. 2 dargestellt ist. Die Umschaltvorrichtung ist in dem Verstellantrieb integriert und kann auch nachgerüstet werden.

Der Antrieb 6 umfasst üblicherweise zwei Motoren 8, 9, die hier als Horizontalmotor- und Vertikalmotor bezeichnet werden, wobei diese Bezeichnung mit der Fig. 1 oben übereinstimmt, d.h. der dargestellte Zustand der Schaltung entspricht dem Zustand nach Fig. 1 oben.

Die Motoren 8, 9, deren Antriebswellen mit einer Getriebeanordnung verbunden sind, sind Bestandteil einer elektrischen Schaltung, die die Zuordnung von Vertikal- und Horizontalverstellung des Betätigungsschalters im Innenraum des Fahrzeugs auch bei einer 90°-Verdrehung des Verstellantriebes 6 beibehält. Im Falle eines linken Verstellantriebes bedeutet diese Schaltungstechnik das Vertauschen von Horizontal- und Vertikalmotor 8, 9 sowie die Drehrichtungsumkehr des nunmehr als Horizontalverstellung fungierenden Vertikalmotors 9.

Wie aus Fig. 2 zu erkennen ist, sind drei Leitungen vom Betätigungsschalter vorgesehen, eine Leitung 10, auf der das Signal zur horizontalen Verstellung des Spiegelglases 5 (Verstellung um die vertikale Achse 13 in Fig. 1 oben) geliefert wird, eine Leitung 11, auf der das Signal zur vertikalen Verstellung des Spiegelglases 5 (Verstellung um die horizontale Achse 14 entsprechend Fig. 1 oben) geliefert wird und eine gemeinsame Leitung 12. Der Horizontalmotor 8 ist zwischen die Leitungen 10 und 12 und der Vertikalmotor 9 ist zwischen die Leitungen 11 und 12 geschaltet. In den Verbindungen zu den Motoren 8, 9 sind Kontakte k₁' sowie k₁" geschaltet, die von einem Relais K1 aktiviert werden, wobei im Ruhezustand der Pluspol des Horizontalmotors 8 mit der Leitung 10 verbunden ist und der Pluspol des Vertikalmotors 9 über einen weiteren Kontakt k'₂ an die Leitung 11 angeschlossen ist. Der negative Pol des Motors 8 ist direkt mit der Leitung 12 verbunden, während der negative Pol des Motors 9 über einen Kontakt k₂" an die Leitung 12 angeschlossen ist. Die Kontakte k₂' und k₂" werden von einem Relais K2 aktiviert.

In Reihe mit den Relais K1 und K2 ist ein Positionsschalter S geschaltet, der in der Stellung des Spiegelkopfes entsprechend Fig. 1 oben geöffnet ist. Ein solcher Positionsschalter kann als mechanischer, optischer, elektrischer, elektrooptischer, induktiver, kapazitiver, magnetischer Schalter oder Gravitationsschalter ausgebildet sein oder durch eine Kombination derselben gebildet werden. Der Positionsschalter detektiert die vertikale Stellung des Spiegelkopfes 3 entsprechend Fig. 1 unten und geht in dieser Stellung in seinen geschlossenen Zustand über. Beispielsweise ist denkbar, daß der Schalter S als Kugelschalter ausgebildet ist, der beim Schwenken des Spiegelkopfes mit seiner Kugel Kontakte überbrückt. Eine andere Ausführungsform ist eine Schwerkraftklappe, die eine von einer Lichtquelle (z.B. JR-Quelle) ausgesandte Strahlung zu einem Empfänger reflektiert oder unterbricht.

Da die darstellte Schaltung nach Fig. 2 nicht ständig an Spannung liegt, muß die Spannung zur Versorgung der Schaltung aus den jeweiligen Motorsignalen gewonnen werden. Dazu sind die Leitungen 10 und 11 jeweils mit den Anoden und den Kathoden von jeweils zwei Dioden verbunden, die im vorliegenden Fall als Gleichrichterbrücke GL2 ausgebildet sind und ODER-Verknüpfungen bilden. Das eine Paar von Dioden ist mit dem Emitter eines pnp-Transistors T1 und das andere Paar von Dioden ist mit dem Emitter eines npn-Transistors T2 verbunden, wobei die Kollektoren der Transistoren T1, T2 miteinander verbunden sind und gleichfalls an einen Brückengleichrichter GL1 angeschlossen sind, über den die Spannungsversorgung der Relais K1, K2 vorgenommen wird. Die jeweilige Basis der Transistoren T1, T2 ist über einen Widerstand mit der Leitung 12 verbunden. Der Brückengleichrichter GL1 ist mit den Verbindungspunkten zwischen den Dioden an das Relais K1, über den Positionsschalter S an das Relais K2 und an die Leitung 12 angeschlossen.

Wie ausgeführt, bildet der Brückengleichrichter GL2 eine ODER-Verknüpfung der Signale Horizontal- bzw. Vertikalverstellung, und die Transistoren T1 und T2 bilden eine gegenseitige Verriegelung dieser Signale, um ein Übersprechen auf das jeweils andere zu vermeiden. Da die Relais K1, K2 im Ausführungsbeispiel monostabile Relais kleiner Bauform sind, die nur in einer Richtung der Spannung anziehen, ist der Brükkengleichrichter GL1 vorgesehen. Er kann weggelassen werden, wenn andere Relais verwendet werden.

In dem in Fig. 2 dargestellten Zustand, der einer Spiegelglasverstellung entsprechend Fig. 1 oben entspricht, wird bei einer durch den Betätigungsschalter im Innenraum des Fahrzeug vorgegebenen Horizontalverstellung ein Motorsignal über die Leitungen 10 und 12 erzeugt, wobei je nach Stromrichtung, d.h. von Leitung 10 nach Leitung 12 oder von Leitung 12 nach Leitung 10 der Horizontalmotor 8 in die eine oder andere Drehrichtung dreht und die Spiegelglasanordnung 5 über ein Getriebe oder eine sonstige Übersetzung bewegt. Dabei ist der Kontakt k₁' geschlossen, da der Positionsschalter S offen ist und das Relais K1 nicht erregt wird. In entsprechender Weise fließt bei einem Signal für die Vertikalverstellung ein Strom über die Leitung 11, die Kontakte k₁" und k₂', den Motor 9 und den Kontakt k₂" sowie die Leitung 12 oder umgekehrt, wodurch der Motor 9 eine Vertikalverstellung des Spiegelglases 5 vornimmt.

Wenn der Spiegelkopf 3 um den Drehpunkt 7 manuell gedreht wird, schließt sich der Positionsschalter S und im Falle eines Motorsignals auf dem jeweiligen Paar von Leitungen fließt ein Strom über zwei Dioden des Gleichrichters GL2 und einen der Transistoren T1, T2, wobei je nach Stromrichtung der eine Transistor schaltet und der andere sperrt. Dadurch werden die Relais K1, K2 erregt und ihre Kontakte schalten in die nicht dargestellte Stellung. Im Falle eines vom Betätigungsschalter gelieferten Horizontalsignals auf den Leitungen 10, 12 fließt ein Strom von der Leitung 10 über den Kontakt k₁", k₂" über den Motor von minus nach plus, den Kontakt k₂' und die Leitung 12 bzw. umgekehrt. Da der Kontakt k₁' nicht mit der Leitung 10 verbunden ist, fließt über den Horizontalmotor 8 kein Strom.

In entsprechender Weise fließt bei einem Signal zur Vertikalverstellung vom Betätigungsschalter ein Strom über die Leitung 11, den Kontakt k₁', den Horizontalmotor 8 von plus nach minus und die Leitung 12 oder umgekehrt. Es ist zu erkennen, daß in dem in Fig. 1 unten dargestellten Fall die Motoren 8, 9 jeweils vertauscht werden und zusätzlich die Drehrichtung bezüglich der Signale von einem Motor umgekehrt wird.

In dem beschriebenen Ausführungsbeispiel wird eine schaltungsgemäße Ausgestaltung beschrieben, selbstverständlich sind andere Schaltungen denkbar, die das Vertauschen der Motoren sowie eine Drehrichtungsumkehr vornehmen können. In Fig. 2 werden zwei baugleiche monostabile Relais mit jeweils zwei Kontakten verwendet, die üblicherweise kostengünstig und klein sind. Es kann aber auch nur ein Relais mit drei Kontakten verwendet werden, wobei der Kontakt k'₁ dann wegfällt und der Pluspol des Motors 8 mit dem Kontakt k"₁ verbunden wird.

## Patentansprüche

1. Antriebsvorrichtung zum Verstellen der Spiegelanordnung eines Rückblickspiegels mit einem Spiegelfuß und einem die Spiegelanordnung aufnehmenden Spiegelkopf, der über einen Drehpunkt zwischen einer ersten und einer zweiten Stellung einstellbar ist, mit einer Elektromotoranordnung und mit einem die Richtung einer Verstellung der Spiegelanordnung vorgebenden Betätigungsschalter, der abhängig von seiner Betätigung elektrische Signale an die Elektromotoranordnung zur Verstellung der Spiegelanordnung liefert,
**dadurch gekennzeichnet,**
**daß** eine einen Positionsschalter (S) umfassende elektrische/elektronische Umschaltvorrichtung vorgesehen ist, die die an die Elektromotoranordnung (8, 9) gelieferten Signale abhängig vom Schaltzustand des Positionsschalters (S) derart umschaltet, daß sowohl in der ersten als auch in der zweiten Stellung des Spiegelkopfes (3) die Zuordnung zwischen der durch den Betätigungsschalter vorgegebenen Richtung der Verstellung und der Verstellrichtung der Spiegelanordnung (5) erhalten bleibt.

2. Antriebsvorrichtung nach Anspruch 1, **dadurch gekennzeichnet, daß** der Elektromotor einen ersten und einen zweiten Motor (8, 9) aufweist, wobei die Umschaltvorrichtung in dem einen Schaltzustand des Positionsschalters (S) über eine Schaltvorrichtung (K1, K2) ein für eine Horizontalverstellung von dem Betätigungsschalter geliefertes Signal an den ersten Motor (8) und ein für eine Vertikalverstellung geliefertes Signal an den zweiten Motor (9) liefert und in dem anderen Schaltzustand des Positionsschalters (S) das Signal für eine Horizontalverstellung an den zweiten Motor (9) und das Signal für eine Vertikalverstellung an den ersten Motor (8) liefert.

3. Antriebsvorrichtung nach Anspruch 2, **dadurch gekennzeichnet, daß** die Zuordnung zwischen Drehrichtung mindestens eines Motors und Richtung der Verstellung der Spiegelanordnung durch die Schaltvorrichtung (K2) geändert wird.

4. Antriebsvorrichtung nach einem der Ansprüche 1 bis 3, **dadurch gekennzeichnet, daß** der Betätigungsschalter vier Betätigungsrichtungen aufweist, die den Verstellrichtungen der Spiegelanordnung (5) zugeordnet sind.

5. Antriebsvorrichtung nach einem der Ansprüche 1 bis 4, **dadurch gekennzeichnet, daß** der Betätigungsschalter entsprechend der gewünschten Verstellrichtung der Spiegelanordnung (4) unterschiedliche Spannungssignale liefert.

6. Antriebsvorrichtung nach einem der Ansprüche 1 bis 5, **dadurch gekennzeichnet, daß** die Schaltvorrichtung mindestens ein Relais mit insgesamt mindestens drei Umschaltkontakten aufweist, die in den Versorgungsleitungen (10, 11, 12) zu dem ersten und zweiten Motor (8, 9) liegen.

7. Antriebsvorrichtung nach Anspruch 6, **dadurch gekennzeichnet, daß** zwei Relais (K2) vorgesehen sind, deren jeweils zwei Umschaltkontakte in der Versorgungsleitung zu mindestens einem der Motoren (8, 9) liegen.

8. Antriebsvorrichtung nach Anspruch 7, **dadurch gekennzeichnet, daß** die Relais als monostabile Relais ausgebildet sind.

9. Antriebsvorrichtung nach einem der Ansprüche 1 bis 8, **dadurch gekennzeichnet, daß** die Spannung zur Versorgung der Umschaltvorrichtung aus den jeweiligen Signalen von dem Betätigungsschalter gewonnen wird.

10. Antriebsvorrichtung nach Anspruch 9, **dadurch gekennzeichnet, daß** die Signale vom Betätigungsschalter über eine elektronische Schaltelemente aufweisenden Verriegelungsschaltung geführt sind, die eine gegenseitige Verriegelung der vom Betätigungsschalter gelieferten Signale bilden.

11. Antriebsvorrichtung nach einem der Ansprüche 1 bis 10, **dadurch gekennzeichnet, daß** der Positionsschalter (S) als mechanischer, elektrischer, optischer, elektrooptischer, induktiver, kapazitiver, magnetischer und/oder Gravitationsschalter ausgebildet ist.

## Claims

1. Drive device for adjusting the mirror assembly of a rear-view mirror with a mirror base and a mirror head which receives the mirror assembly and which is adjustable via a pivot point between a first and a second position, with an electric motor assembly and with an operating switch which predetermines the direction of adjustment of the mirror assembly and which, as a function of its operation, delivers electrical signals to the electric motor assembly for adjustment of the mirror assembly, **characterised in that** there is provided an electrical/electronic switch-over device which includes a position switch (S) and which switches the signals delivered to the electric motor assembly (8, 9) as a function of the switching state of the position switch (S) in such a way that both in the first and in the second position of the mirror head (3) the coordination between the direction of adjustment predetermined by the operating switch and the direction of adjustment of the mirror assembly (5) is maintained.

2. Drive device according to claim 1, **characterised in that** the electric motor comprises a first and a second motor (8, 9), wherein the switch-over device in one switching state of the position switch (S) via a switching device (K1, K2) delivers to the first motor (8) a signal delivered for horizontal adjustment by the operating switch and to the second motor (9) a signal delivered for vertical adjustment and in the other switching state of the position switch (S) delivers to the second motor (9) the signal for horizontal adjustment and to the first motor (8) the signal for vertical adjustment.

3. Drive device according to claim 2, **characterised in that** the coordination between direction of rotation of at least one motor and direction of adjustment of the mirror assembly is altered by the switching device (K2).

4. Drive device according to any of claims 1 to 3, **characterised in that** the operating switch has four directions of operation which are assigned to the directions of adjustment of the mirror assembly (5).

5. Drive device according to any of claims 1 to 4, **characterised in that** the operating switch delivers different voltage signals according to the desired direction of adjustment of the mirror assembly (4).

6. Drive device according to any of claims 1 to 5, **characterised in that** the switching device has at least one relay (K1, K2) with a total of at least three switch-over contacts which are located in the supply wires (10, 11, 12) to the first and second motors (8, 9).

7. Drive device according to claim 6, **characterised in that** two relays (K2) are provided whose two switch-over contacts each are located in the supply wire to at least one of the motors (8, 9).

8. Drive device according to claim 7, **characterised in that** the relays are designed as monostable relays.

9. Drive device according to any of claims 1 to 8, **characterised in that** the voltage for supply of the switch-over device is obtained from the respective signals from the operating switch.

10. Drive device according to claim 9, **characterised in that** the signals from the operating switch are conducted via a locking circuit comprising electronic switching elements, which form interlocking means for the signals delivered by the operating switch.

11. Drive device according to any of claims 1 to 10, **characterised in that** the position switch (S) is designed as mechanical, electrical, optical, electrooptical, inductive, capacitive, magnetic and/or gravitational switch.

## Revendications

1. Dispositif d'entraînement pour le réglage de l'ensemble miroir d'un rétroviseur comportant un pied de miroir et une tête de miroir recevant l'ensemble miroir qui peut être réglée par l'intermédiaire d'un point de rotation entre une première et une seconde positions, comportant un ensemble de moteur électrique et un commutateur de commande définissant le sens d'un réglage de l'ensemble miroir, lequel fournit en fonction de sa commande des signaux électriques à l'ensemble de moteur électrique pour le réglage de l'ensemble miroir, **caractérisé en ce qu'**il est prévu un dispositif de commutation électrique/électronique comprenant un commutateur de position (S) est prévu, lequel commute les signaux transmis à l'ensemble de moteur électrique (8, 9) en fonction de l'état de commutation du commutateur de position (S), de telle sorte que, dans la première ainsi que dans la seconde position de la tête de miroir (3), l'attribution entre le sens de réglage défini par le commutateur de commande et le sens de réglage de l'ensemble miroir (5) demeure maintenue.

2. Dispositif d'entraînement selon la revendication 1, **caractérisé en ce que** le moteur électrique comprend un premier et un second moteurs (8, 9), moyennant quoi le dispositif de commutation, dans un premier état de commutation du commutateur de position (S), transmet via un dispositif de commutation (K1, K2) un signal fourni pour un réglage horizontal par le commutateur de commande au premier moteur (8), et un signal fourni pour un réglage vertical au second moteur (9) et, dans l'autre état de commutation du commutateur de position (S), transmet le signal pour un réglage horizontal au second moteur (9), et le signal pour un réglage vertical au premier moteur (8).

3. Dispositif d'entraînement selon la revendication 2, **caractérisé en ce que** l'attribution entre le sens de rotation d'au moins un moteur et le sens de réglage de l'ensemble miroir est modifiée par le dispositif de commutation (K2).

4. Dispositif d'entraînement selon une des revendications 1 à 3, **caractérisé en ce que** le commutateur de commande comprend quatre sens de commande qui sont attribuées aux sens de réglage de l'ensemble miroir (5).

5. Dispositif d'entraînement selon une des revendications 1 à 4, **caractérisé en ce que** le commutateur de commande fournit des signaux de tension variables en fonction du sens de réglage souhaité de l'ensemble miroir (4).

6. Dispositif d'entraînement selon une des revendications 1 à 5, **caractérisé en ce que** le dispositif de commutation comprend au moins un relais comportant en tout au moins trois contacts de commutation, qui sont situés dans les lignes d'alimentation (10, 11, 12) conduisant au premier et au second moteurs (8, 9).

7. Dispositif d'entraînement selon la revendication 6, **caractérisé en ce que** deux relais (K2) sont prévus, dont respectivement deux contacts de commutation sont situés dans la ligne d'alimentation conduisant à au moins un des moteurs (8, 9).

8. Dispositif d'entraînement selon la revendication 7, **caractérisé en ce que** les relais sont configurés comme des relais monostables.

9. Dispositif d'entraînement selon une des revendications 1 à 8, **caractérisé en ce que** la tension pour l'alimentation du dispositif de commutation est prélevée dans les signaux respectifs par le commutateur de commande.

10. Dispositif d'entraînement selon la revendication 9, **caractérisé en ce que** les signaux dirigés par le commutateur de commande passent par un circuit de verrouillage comprenant un élément de commutation électronique, le circuit de verrouillage formant un verrouillage mutuel des signaux transmis par le commutateur de commande.

11. Dispositif d'entraînement selon une des revendications 1 à 10, **caractérisé en ce que** le commutateur de position (S) est configuré comme un commutateur mécanique, électrique, optique, électro-optique, inductif, capacitif, magnétique et/ou gravitationnel.
